# EUROPEAN PATENT APPLICATION

(11) **EP 4 648 430 A1**
(43) Date of publication of application: **12.11.2025**
(21) Application number: 25710295.4
(22) Date of filing: 14.03.2025
(51) Int. Cl.: H04N 21/854, H04N 21/4722, H04N 21/466, H04N 21/44, H04N 21/431, G06F 16/73, G06N 3/0475

(54) **METHOD FOR PROVIDING VIDEO, ELECTRONIC DEVICE FOR SUPPORTING SAME, AND STORAGE MEDIUM**

(30) Priority: 14.03.2024 KR 20240035630; 12.04.2024 KR 20240049050
(71) Applicant: Samsung Electronics Co., Ltd, Suwon-si, Gyeonggi-do 16677 (KR)
(72) Inventor: AHN, Seonmin, Suwon-si, Gyeonggi-do 16677 (KR); YEO, Jaeyung, Suwon-si, Gyeonggi-do 16677 (KR); OH, Huncheol, Suwon-si, Gyeonggi-do 16677 (KR); LEE, Subin, Suwon-si, Gyeonggi-do 16677 (KR); CHUNG, Miyeoung, Suwon-si, Gyeonggi-do 16677 (KR)
(74) Representative: Gulde & Partner
(86) International application number: PCT/KR2025/003358
(87) International publication number: WO 2025/193001

(57) **Abstract**

An electronic device according to an embodiment may include memory storing instructions and a processor. The instructions, when executed by the processor, may cause the electronic device to identify first information associated with a description corresponding to a plurality of scenes; identify, based on the first information, at least one main object included in at least a portion of the plurality of scenes; obtain, based on information output from a first model by inputting a description corresponding to the at least one main object into the first model trained to output content based on receiving information associated with a scene, first content corresponding to the at least one main object; and obtain a video including the plurality of scenes, based on the first information and the information on the first content, wherein the at least one main object is consistently visualized in the at least a portion of the plurality of scenes.

## Description

### [Technical Field]

The disclosure relates to a method for providing a video, an electronic device supporting the same, and a storage medium.

### [Background Art]

Thanks to remarkable developments in information communication technology and semiconductor technology, the distribution and use of various electronic devices are rapidly increasing. Electronic devices are being developed to perform communication while being carried by a user. The term "electronic device" may refer to a device which performs a specific function according to its equipped program, such as a mobile communication terminal, a tablet PC, an image/sound device, a desktop/laptop computer, or a navigation device for automobiles.

An electronic device may require technology for providing an image or a video according to a user's request.

The above-described information may be provided as related art for the purpose of assisting in understanding the disclosure. No assertion or decision is made as to whether any of the above might be applicable as prior art with regard to the disclosure.

### [Detailed Description of the Invention]

### [Technical Solution]

An electronic device according to an embodiment may include memory storing instructions and a processor. The instructions, when executed by the processor, may cause the electronic device to identify first information associated with a description corresponding to a plurality of scenes. The instructions, when executed by the processor, may cause the electronic device to identify, based on the first information, at least one main object included in at least a portion of the plurality of scenes. The instructions, when executed by the processor, may cause the electronic device to, obtain, based on information output from a first model, first content corresponding to the at least one main object by inputting a description corresponding to the at least one main object into the first model trained to output content based on receiving information associated with a scene. The instructions, when executed by the processor, may cause the electronic device to obtain a video including the plurality of scenes, based on the first information and information on the first content, wherein the at least one main object is consistently visualized in the at least a portion of the plurality of scenes.

A method according to an embodiment may include identifying first information associated with a description corresponding to a plurality of scenes. The method may include identifying, based on the first information, at least one main object included in at least a portion of the plurality of scenes. The method may include obtaining, based on information output from a first model by inputting a description corresponding to the at least one main object into the first model configured to output content based on receiving information associated with a scene, first content corresponding to the at least one main object. The method may include obtaining a video including the plurality of scenes, based on the first information and the information on the first content, wherein the at least one main object is consistently visualized in the at least a portion of the plurality of scenes.

In an embodiment, in a computer-readable medium recording computer-executable instructions that, when executed by a processor of an electronic device, may cause the electronic device to receive a request associated with obtaining a video including a plurality of scenes. The computer-executable instructions, when executed by the processor, may cause the electronic device, based on a first information associated with a description associated with the plurality of scenes identified based on the request, to identify at least one main object included in at least a portion of the plurality of scenes; and to obtain first content corresponding to at least one main object, based on information output from a first model by inputting a description corresponding to the at least one main object into the first model configured to output content based on receiving information associated with a scene. The computer-executable instructions, when executed by the processor, may cause the electronic device to obtain the video including the plurality of scenes, based on the description and the information on the first content, wherein the at least one main object is consistently visualized in the at least a portion of the plurality of scenes.

### [Brief Description of Drawings]

With regard to the description of the drawings, the same or like reference signs may be used to designate the same or like elements.
FIG. 1 is a block diagram of an electronic device in a network environment according to an embodiment.
FIG. 2 is a block diagram of an electronic device according to an embodiment.
FIG. 3 is a block diagram of memory of an electronic device according to an embodiment.
FIG. 4 is a flowchart illustrating a method for providing a video according to an embodiment.
FIGS. 5A, 5B, and 5C illustrate a method for providing a video according to an embodiment.
FIG. 6 is a flowchart illustrating a method for obtaining a video according to an embodiment.
FIG. 7 is a signal flowchart illustrating a method for obtaining a video according to an embodiment.
FIG. 8 is a flowchart illustrating a method for obtaining information associated with a description corresponding to a plurality of scenes according to an embodiment.
FIG. 9 illustrates a method for obtaining information associated with a description corresponding to a plurality of scenes according to an embodiment.
FIG. 10 is a flowchart illustrating a method for obtaining another image based on stored information corresponding to a main object according to an embodiment.
FIG. 11 is a signal flowchart illustrating a method for obtaining another image based on stored information corresponding to a main object according to an embodiment.
FIG. 12 is a flowchart illustrating a method for providing content associated with a main object according to an embodiment.
FIG. 13 illustrates a method for providing content associated with a main object according to an embodiment.
FIG. 14 is a flowchart illustrating a method for obtaining an image according to an embodiment.
FIG. 15 illustrates a generative artificial intelligence model according to an embodiment.
FIG. 16 is a flowchart illustrating a method for obtaining an image according to an embodiment.

### [Mode for Carrying out the Invention]

Hereinafter, embodiments of the disclosure will be described in detail with reference to the drawings so that those skilled in the art to which the disclosure pertains can easily implement the disclosure. However, the disclosure may be implemented in various forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

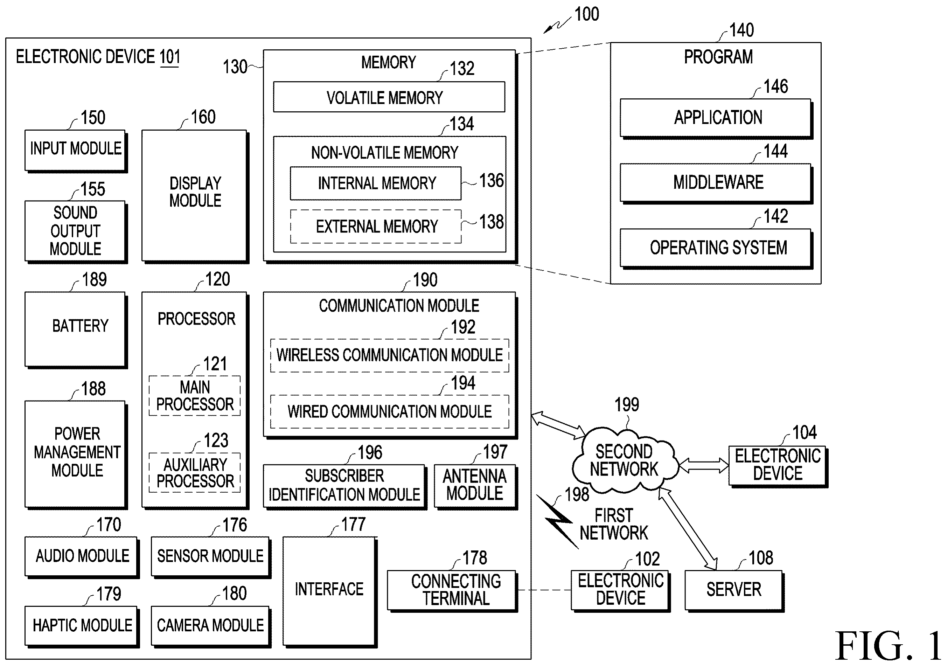

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

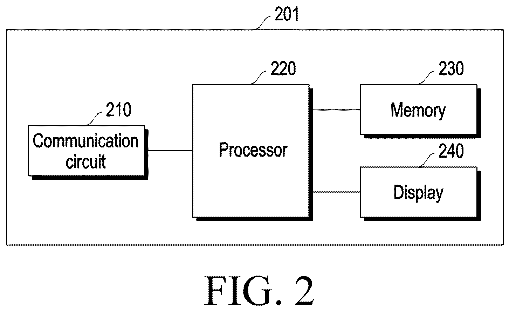

FIG. 2 is a block diagram of an electronic device according to an embodiment.

In an embodiment, an electronic device 201 may be the electronic device 101 shown in FIG. 1.

Referring to FIG. 2, in an embodiment, the electronic device 201 may include a communication circuit 210, a processor 220, memory 230, and/or a display 240.

In an embodiment, the communication circuit 210 may be included in the communication module 190 of FIG. 1.

In an embodiment, the communication circuit 210 may transmit or receive a signal for communication with an external electronic device (e.g., the electronic device 102, the electronic device 104, and/or the server 108 of FIG. 1).

In an embodiment, the processor 220 may be included in the processor 120 of FIG. 1.

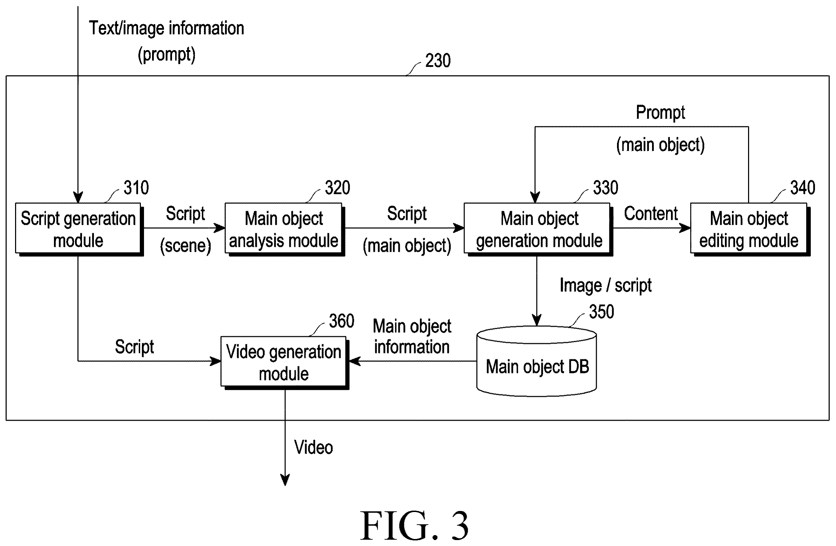

In an embodiment, the processor 220 may control the overall operation of providing a video. The processor 220 may include one or more processors for performing an operation of providing a video. For example, the processor 220 may correspond to a plurality of processors which collectively perform a plurality of operations by dividing the same among the processors. An operation of providing a video performed by the processor 220 will be described in detail with reference to FIGS. 3 to 16.

In an embodiment, the processor 220 may include a neural processing unit (NPU) for performing a video obtaining operation. For example, the processor 220 may include an NPU capable of performing a video obtaining operation by using an artificial intelligence model when the video obtaining operation is performed using the artificial intelligence model, but is not limited thereto. For example, the processor 220 may include a graphic processing unit (GPU) capable of performing a video obtaining operation by using a designated algorithm when the video obtaining operation is performed using the designated algorithm.

In an embodiment, the memory 230 may be included in the memory 130 of FIG. 1.

In an embodiment, the memory 230 may store information for performing an operation of providing a video.

In an embodiment, the memory 230 may store a generative artificial intelligence (AI) model. The generative AI model may include an artificial intelligence model trained to, based on receiving of an input of content such as text, audio, and/or an image, output content similar to the input content. For example, the generative AI model may learn a pattern of content included in training data. The type of content output by the generative AI model may include at least one of an image, audio, or text associated with a description of the output content. In an embodiment, an operation of obtaining content by using a generative model may be referred to as an "operation of generating content". In an embodiment, the generative AI model may be stored in an external electronic device.

In an embodiment, the display 240 may be included in the display module 160 of FIG. 1.

In an embodiment, the display 240 may play a video stored in the memory 230. For example, the display 240 may display a video playback screen under the control of the processor 220. A screen displayed by the display 240 will be described in detail later in FIGS. 3 to 16.

In FIG. 2, the electronic device 201 is exemplified as including the communication circuit 210, the processor 220, the memory 230, and/or the display 240, but is not limited thereto. In an embodiment, the electronic device 201 may further include at least one component among the components included in the electronic device 101 of FIG. 1. For example, the processor 201 may further include at least one of the input module 150 (e.g., a microphone), the sound output module 155 (e.g., a speaker), or the camera module 180.

FIG. 3 is a block diagram of memory of an electronic device according to an embodiment.

In an embodiment, referring to FIG. 3, the memory 230 (e.g., the memory 230 of FIG. 2) may include a script generation module 310, a main object analysis module 320, a main object generation module 330, a main object editing module 340, a main object database (DB) 350, and a video generation module 360.

In an embodiment, modules (e.g., at least one of the script generation module 310, the main object analysis module 320, the main object generation module 330, the main object editing module 340, the main object DB 350, or the video generation module 360) implemented in the electronic device 201 (or stored in the memory 230) may be implemented in the form of a program, a computer code, instructions, a routine, a process, software, an application, firmware, or a combination of at least two or more thereof executable by a processor (e.g., the processor 220 of FIG. 2). For example, when at least one of the modules is executed, the processor 220 may perform an operation corresponding to at least one module. Hereinafter, the description "a specific module performs an operation" may be understood as "as a specific module is executed, the processor 220 performs an operation corresponding to the specific module". In an embodiment, at least some of the modules may include multiple programs, but are not limited to what is described. Meanwhile, at least some of the modules may be implemented in the form of hardware. For example, at least a portion of the script generation module 310, the main object analysis module 320, the main object generation module 330, the main object editing module 340, the main object DB 350, or the video generation module 360 may be implemented as a processing circuit (not shown). In an embodiment, the modules may be implemented as a service or an application when running on an Android operating system.

In an embodiment, the script generation module 310 may include a generative AI model (e.g., a large language model (LLM)) trained to output scripts corresponding to a plurality of scenes based on receiving of an input of a prompt. For the sake of simplicity, respective scripts will also be referred to below as description. In an embodiment, the script generation module 310 may obtain a script corresponding to an input prompt by using an LLM stored in a different area from an area corresponding to the script generation module 310 in the memory 230. A prompt input to the script generation module 310 may include, for example, at least one of text information or image information. A script output by the script generation module 310 may include, for example, text information associated with a description corresponding to a scene.

In an embodiment, information output by the script generation module 310 may vary depending on the type of the input prompt. For example, the script generation module 310 may output text information including a brief summary associated with a video or text information associated with a description corresponding to a plurality of scenes, based on whether the type of the input prompt corresponds to a long type or a short type. In an embodiment, the information output by the script generation module 310 based on a long input prompt may be the same as the information output by the script generation module 310 based on a short input prompt.

In an embodiment, the script generation module 310 may output text information associated with a description corresponding to a plurality of scenes, based on receiving of an input of a relatively long prompt. A relatively long input prompt may include a description associated with a video generated (or obtained) by the electronic device 201. The description associated with the video may include, for example, a relatively specific description associated with one or more scenes included in the video. The relatively long input prompt input to the script generation module 310 may be obtained based on a relatively short prompt by the electronic device 201 or may be obtained based on a user input, and there is no limitation thereto. For example, text information output by the script generation module 310 may correspond to each of a plurality of scenes. The output text information may include, for example, a script corresponding to a scene, such as a script corresponding to a first scene or a script corresponding to a second scene.

In an embodiment, the script generation module 310 may output a relatively long script, based on receiving of an input of a relatively short input prompt (e.g., a sentence). The relatively short input prompt may include, for example, a brief summary associated with a video generated (or obtained) by the electronic device 201. The script generation module 310 may also receive an input of a rule or condition together with a sentence. The rule or condition may include a command associated with the context of a script to be output by the script generation module 310. The script generation module 310 may output a script associated with at least one keyword, based on at least one of at least one keyword included in an input sentence or a condition input together with the sentence. For example, the script output by the script generation module 310 may include text information associated with a story including a plurality of scenes. In general, a story may include a description concerning a plurality of scenes. The script may include a plurality of paragraphs corresponding to the plurality of scenes, respectively. For example, a paragraph may include a plurality of sentences corresponding to a scene. In an embodiment, an operation of outputting a script corresponding to a scene by the script generation module 310 may be referred to as an "operation of generating a script".

In an embodiment, the script generation module 310 may identify whether a prompt corresponds to a short type or a long type, based on identifying whether information included in a prompt satisfies a condition associated with the type of the prompt. For example, the script generation module 310 may identify whether a prompt corresponds to a short type or a long type, based on identifying whether the number of sentences included in the prompt exceeds a threshold. A specific figure of a threshold corresponding to the number of sentences may be changed according to an embodiment, and there is no limitation thereto. The script generation module 310 may identify whether a prompt corresponds to a short type or a long type, based on identifying whether the number of words included in the prompt exceeds a threshold. A specific figure of a threshold corresponding to the number of words may be changed according to an embodiment, and there is no limitation thereto. In an embodiment, the threshold may be configured to a specific figure or a specific range.

In an embodiment, the main object analysis module 320 may output at least one script corresponding to at least one main object, based on receiving a script output by the script generation module 310. In an embodiment, a main object may be an object which requires consistency to be maintained during a process of switching between scenes (or video frames) among a plurality of objects included in a video provided by the electronic device 201. The main object may include a main character and a main background. For example, if the type (or genre) of a description corresponding to a prompt or a script corresponds to a novel, the main character may include a person, an animal, or an object which contributes relatively highly to the progress of a story. The main background may include a place which is central to the progress of the story. In an embodiment, the at least one main object may include at least one of a character or audio information corresponding to the character.

In an embodiment, the main object analysis module 320 may include an artificial intelligence model trained to perform a natural language processing (NLP) operation. For example, the main object analysis module 320 may identify at least one main object from input information, based on a keyword detection algorithm. The main object analysis module 320 may output a description corresponding to a main object, such as a script, based on receiving of an input of a description corresponding to a plurality of scenes, which e.g. includes a plurality of scripts corresponding to the plurality of scenes, respectively.

In an embodiment, the main object analysis module 320 may identify a main object based on at least one keyword (or word) identified from the input information, based on receiving of an input of a relatively short prompt or script. When the relatively short prompt is input, the main object analysis module 320 may output (or generate) a relatively long script corresponding to the input prompt. The relatively long script may include scripts corresponding to a plurality of scenes, respectively. The relatively long script may also include the entire script corresponding to a story of the input prompt. The main object analysis module 320 may identify at least one main object, based on at least one piece of information identified from the output script. A manner in which the main object analysis module 320 identifies at least one main object from a description corresponding to a plurality of scenes, e.g. from a relatively long script, may be the same as or similar to a manner described below.

In an embodiment, based on receiving of an input description, the main object analysis module 320 may identify at least one main object, based on identifying of at least one of a frequency at which information corresponding to the object is identified in an input description, a relative location of the information corresponding to the object in the input description, a relative frequency of the information corresponding to the object in a script similar to the input description, or a description level of a description associated with the object. For example, when a frequency at which information corresponding to an object is identified in an input script is relatively high, the main object analysis module 320 may identify the object as a main object. In an embodiment, when information corresponding to an object is repeatedly identified in scripts corresponding to a plurality of scenes, the main object analysis module 320 may identify the object as a main object. The main object analysis module 320 may identify that the closer the location where information corresponding to an object is detected in an input script is to a starting point of a script, the higher the probability that the object corresponds to a main object is. The main object analysis module 320 may identify that the higher the frequency at which information corresponding to an object is detected in a similar description which corresponds to the same type as an input description, the higher the probability that the object corresponds to a main object is. The main object analysis module 320 may identify that the higher the description level of a description associated with an object, the higher the probability that the object corresponds to a main object is. A description level may be identified as higher the more detailed the description associated with an object is. For example, when an object identified from an input prompt corresponds to a place or a person, the main object analysis module 320 may identify an object associated with detailed descriptions as a main object, compared to an object associated with a simple name, and there is no limitation thereto.

In an embodiment, although not shown in FIG. 3, the main object analysis module 320 may receive a user input associated with designation of a main object. The main object analysis module 320 may identify an object identified from a user input as a main object, based on receiving of the user input associated with the designation of the main object.

In an embodiment, although not shown in FIG. 3, the main object analysis module 320 may receive, from the main object generation module 330, a script associated with an object obtained by the main object generation module 330. The main object analysis module 320 may identify a main object, based on at least one of a script associated with an object received from the main object generation module 330 or a script corresponding to a scene received from the script generation module 310.

In an embodiment, the main object generation module 330 may include a generative AI model trained to output content associated with the main object, based on receiving of an input of a description corresponding to the main object. The content associated with the main object may include, for example, at least one of text information associated with a description corresponding to the main object, image information corresponding to the main object, or audio information associated with the main object. The above-mentioned information that may be included in the content associated with the main object will also be referred to hereinafter simply as information on the content. The text information associated with the description corresponding to the main object may include, for example, a "prompt corresponding to the main object". The image information corresponding to the main object may include a "preview image". In an embodiment, the prompt corresponding to the main object may be provided to the main object generation module 330 as input information for obtaining (or generating) image information corresponding to the main object. For example, the main object analysis module 320 may provide a prompt corresponding to a main object to the main object generation module 330 as input information. Based on the input prompt corresponding to the main object, the main object generation module 330 may output at least one of text associated with a description corresponding to the main object, image information corresponding to the main object, or audio information associated with the main object. In an embodiment, the text information associated with the description corresponding to the main object output by the main object generation module 330 may be different from a prompt input to the main object generation module 330. For example, the text information associated with the description corresponding to the main object output by the main object generation module 330 may include a user-friendly summary associated with the main object. In an embodiment, the electronic device 201 may improve the consistency of a shape corresponding to a visualized main object, based on a user input associated with providing content associated with the main object and approval of the content associated with the main object before obtaining a video.

In an embodiment, the main object editing module 340 may output a prompt corresponding to the main object, based on receiving of an input of content associated with the main object. For example, the main object editing module 340 may transmit a changed prompt associated with the main object to the main object generation module 330, based on identifying of a user input associated with a change in the text information associated with the description corresponding to the main object. When the user input associated with the change in the text information associated with the description corresponding to the main object is not identified, the main object editing module 340 may transmit the prompt corresponding to the main object to the main object generation module 330, based on identifying of a user input associated with a request for obtaining a preview image of the main object.

In an embodiment, the main object generation module 330 may store content associated with the main object in the main object DB 350, e.g. based on identifying of the user input associated with approval of the content associated with the main object. According to an embodiment, user approval is not required. The content stored in the main object DB 350 may include, for example, an image associated with the main object or a script corresponding to the main object. The script corresponding to the main object may include a prompt which is input to the main object generation module 330 to generate (or obtain) an image or audio corresponding to the main object. In an embodiment, the content stored in the main object DB 350 may be used to generate an image associated with a scene including the main object. The content stored in the main object DB 350 may also be used to generate another image.

In an embodiment, the video generation module 360 may obtain a video including a plurality of scenes, based on a description, which may e.g. include a plurality of scripts corresponding to the plurality of scenes, and information on the main object stored in the main object DB 350. For example, the plurality of scripts corresponding to the plurality of scenes input to the video generation module 360 may include information output by the script generation module 310. In an embodiment, the plurality of scripts corresponding to the plurality of scenes input to the video generation module 360 may include a prompt based on a user input without an operation by the script generation module 310. In an embodiment, the video generation module 360 may directly obtain the video including the plurality of scenes, based on a user input (e.g., a prompt or a description) associated with video generation (or obtaining). For example, the user input associated with video generation may include information associated with an instruction, a request, or a summary. In an embodiment, the video including the plurality of scenes may be required so that the consistency or connectivity of the main object included in the video is maintained. For example, both the first and last paragraphs of a prompt input to the script generation module 310 may include text information associated with "boy's behavior". The main object analysis module 320 may automatically identify whether text information associated with a boy identified in a different area of the input prompt corresponds to the same object. When it is identified that the text information associated with the boy corresponds to the same object, consistent visualization of the text information indicating the "boy" may be required. The video generation module 360 may obtain a description corresponding to a plurality of scenes, e.g. a plurality of scripts corresponding to a plurality of scenes output from the script generation module 310. The video generation module 360 may obtain a script corresponding to the "boy" identified as a main object from the main object DB 350. This script may e.g. correspond to the above described information on the content, that may be output by a generative AI model trained to output content associated with the main object, based on receiving of an input of a description corresponding to the main object.

The video generation module 360 may obtain a video including the plurality of scenes, based on the script corresponding to the main object (or the information on the content) and the plurality of scripts corresponding to the plurality of scenes. The video generation module 360 may then consistently visualize the main object by obtaining the video by using the script associated with the main object (or the information on the first content) together with a script corresponding to a scene. That is, due to the fact that the main object has been automatically identified in the description to be included in at least a portion of the plurality of scenes, and due to the fact that a script associated with the main object (or the information on the first content) is available, e.g. in a respective database, the video generation module 360 may consistently visualize the main object throughout the video, i.e. in every scene in which the main object occurs. In particular, no user input is generally required for identifying or approving the main object in the different scenes. In an embodiment, the video generation module 360 may consistently visualize not only a main character but also a main background.

In an embodiment, the video generation module 360 may provide the obtained video through a display (e.g., the display of FIG. 2). The electronic device 201 may play the obtained video through the display. According to an embodiment, the electronic device 201 may execute the main object editing module 340, based on a user input for at least some frames of the video provided through the display. For example, the electronic device 201 may execute the main object editing module 340, based on a user input associated with selection of a main object included in the at least some frames. The electronic device 201 may also provide a message asking whether to change the prompt corresponding to the main object, based on the user input associated with the selection of the main object. The electronic device 201 may provide an editing function of a shape corresponding to the main object, based on executing the main object editing module 340.

In an embodiment, a plurality of modules (e.g., at least one of the script generation module 310, the main object analysis module 320, the main object generation module 330, the main object editing module 340, or the video generation module 360) included in the electronic device 201 may be connected to an AI model. Each of the plurality of modules may perform at least one operation described in the disclosure by using the AI model. For example, each of the plurality of modules may perform at least one operation, based on information output from the AI model, by inputting data into the AI model.

In an embodiment, modules (e.g., at least one of the script generation module 310, the main object analysis module 320, the main object generation module 330, the main object editing module 340, or the video generation module 360) of the disclosure may be implemented as an on-device module in the electronic device 201. AI models included in the modules of the disclosure or AI models used by the modules may be implemented as on-device modules in the electronic device 201. In an embodiment, the AI models may be implemented as a single integrated AI model. Each of the plurality of modules may be connected to the integrated AI model.

In an embodiment, the script generation module 310, the main object analysis module 320, and the main object generation module 330 may be implemented as on-device modules, and the video generation module 360 may be implemented as at least a portion of an external electronic device (e.g., the server 108 of FIG. 1).

In an embodiment, the AI models used by the modules of the disclosure may be implemented as at least a portion of an external electronic device (e.g., the server 108 of FIG. 1). For example, AI models included in the external electronic device may be implemented as an integrated AI model, and there is no limitation thereto.

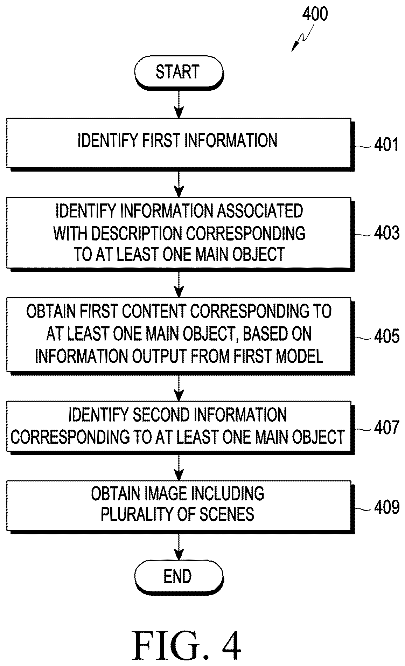

FIG. 4 is a flowchart 400 illustrating a method for providing a video according to an embodiment.

In the following embodiment, each operation may be performed sequentially, but is not necessarily performed sequentially. For example, the order of each operation may be changed, and at least two operations may be performed in parallel.

Referring to FIG. 4, according to an embodiment, in operation 401, the electronic device 201 (e.g., the processor 220 of FIG. 2) may identify first information associated with a description corresponding to a plurality of scenes. According to an embodiment, the electronic device 201 may obtain a prompt input through a display (e.g., the display 240 of FIG. 2). For example, the electronic device 201 may obtain text information associated with the description corresponding to the plurality of scenes, based on a touch input on a display (e.g., a touch screen). In an embodiment, the first information may include at least one of text information, image information, or audio information.

In an embodiment, in operation 403, the electronic device 201 may identify at least one main object, in particular, the electronic device 201 may identify information associated with a description corresponding to the at least one object. Repetitive descriptions may not be repeated as the manner in which identification of a main object may be performed has already been described above with reference to Fig. 3 and the main object analysis module. The electronic device 201 may identify information associated with a description corresponding to at least one main object included in at least a portion of the plurality of scenes, based on the first information. In an embodiment, the electronic device 201 may identify text information associated with the main object from the text information associated with the description corresponding to the plurality of scenes, based on natural language processing.

In an embodiment, in operation 405, the electronic device 201 may obtain first content corresponding to at least one main object, based on information output from a first model. The electronic device 201 may input a description corresponding to the at least one main object (or the information associated with the this description) into the first model trained to output content based on receiving of an input of information associated with a scene, so as to obtain the first content corresponding to the main object, based on the information output from the first model. The first model may include a text-to-image model, and if the model is a generative AI model trained to output image information based on receiving of an input of text information, the first model is not limited to a specific AI model. The first content may include, for example, a prompt corresponding to a main object, a preview image of the main object, or audio information associated with the main object.

In an embodiment, in operation 407, which is optional, the electronic device 201 may identify second information corresponding to at least one main object. The electronic device 201 may identify the second information corresponding to the at least one main object, based on a user input for the first content. In an embodiment, the electronic device 201 may control the display to display the first content. The electronic device 201 may identify, for example, a changed prompt and image information (or audio information) corresponding to the changed prompt as the second information, based on identifying of a user input associated with a change in the prompt corresponding to the main object. The electronic device 201 may identify the first content obtained by the operation 405 as the second information, based on identifying of a user input associated with approval of the first content.

In an embodiment, in operation 409, the electronic device 201 may obtain a video including the plurality of scenes. The electronic device 201 may obtain the video including the plurality of scenes, based on the first information and the information on the first content. According to an embodiment, the video may further be obtained based in the second information, if available. The electronic device 201 may consistently visualize a main object included in at least a portion of the plurality of scenes by obtaining the video based on the first information associated with the description corresponding to the scene and the second information associated with the main object, in particular the information on the first content.

The generative AI model may include an AI model trained to output an image in a manner of removing noise from random noise. For example, the generative AI model may obtain an image, based on receiving of an input of a prompt. The generative AI model may obtain a different image, based on receiving of an input of the same prompt. The generative AI model trained based on a manner of removing random noise may output a different image even when text information included in the input prompt is the same. The electronic device 201 according to an embodiment may consistently visualize a main object included in at least a portion of the plurality of scenes, based on obtaining the information on the first content associated with the main object (and optionally, the second information) before generating the video including the plurality of scenes.

In an embodiment, at least part of the obtaining of the first content corresponding to the at least one main object and at least part of the obtaining of the image including the plurality of scenes may be performed in parallel.

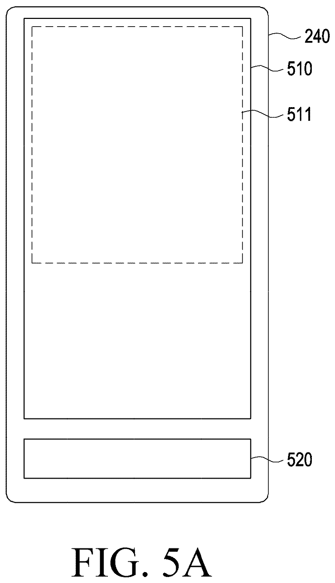

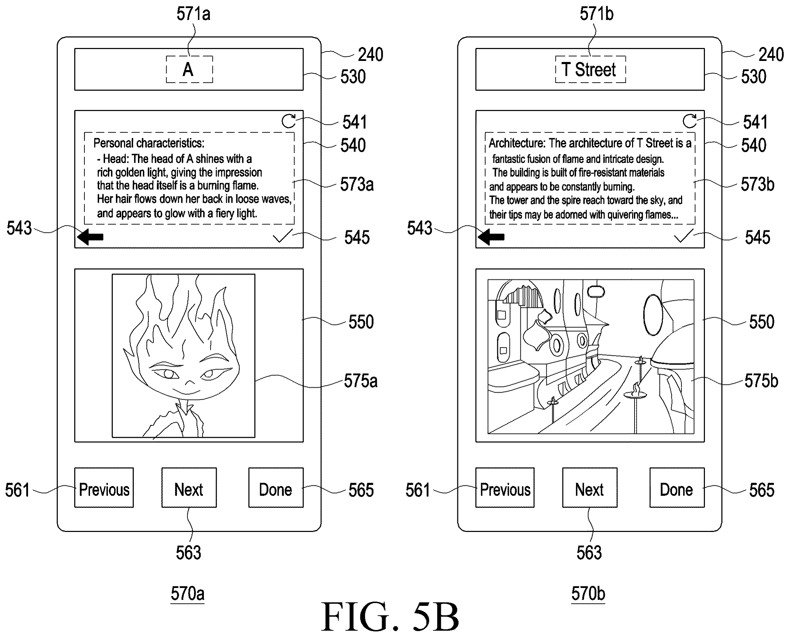

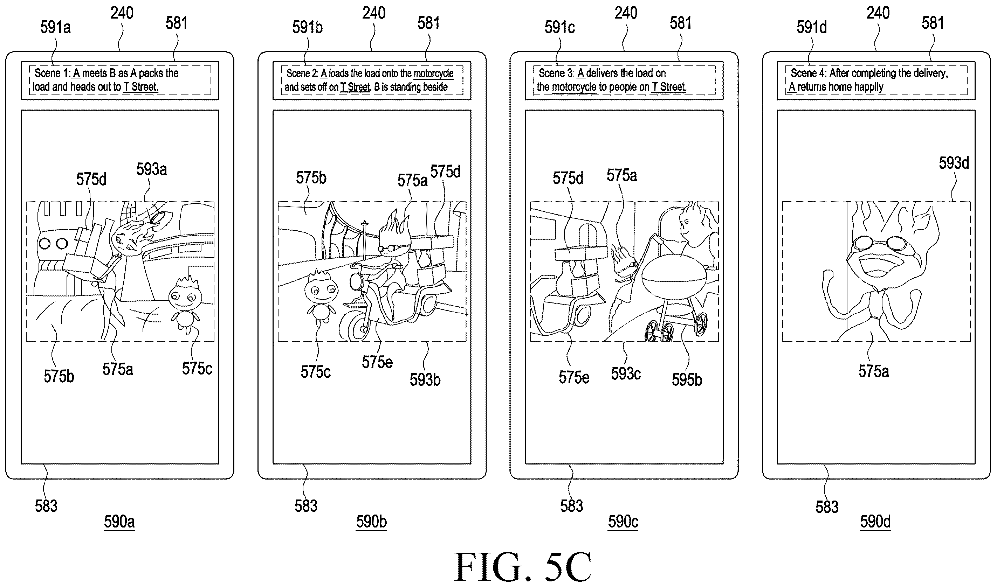

FIGS. 5A, 5B, and 5C illustrate a method for providing a video according to an embodiment.

Referring to FIG. 5A, according to an embodiment, the electronic device 201 may display, through the display 240 (e.g., the display 240 of FIG. 2), a window 510 associated with an input prompt and a window 520 associated with identification of a main object. The electronic device 201 may identify a relatively short input prompt, such as, for example, "A meets B on T Street, and then delivers the load by motorcycle". The input prompt may correspond to a user input (e.g., a touch input or an audio input) associated with video generation (or obtaining). The electronic device 201 may obtain a plurality of scripts corresponding to a plurality of scenes, based on executing a script generation module (e.g., the script generation module 310 of FIG. 3). For example, the plurality of scripts may be obtained based on an input prompt by the script generation module. The electronic device 201 may display the input prompt on at least a partial area 511 of the window 510 associated with the input prompt. The electronic device 201 may also display the plurality of scripts corresponding to the plurality of scenes obtained by the script generation module on the at least a partial area 511. The plurality of scripts corresponding to the plurality of scenes may be obtained, for example, as shown in Table 1.

**[Table 1]**

| Scene numbers | Scripts |
|---|---|
| 1 | **A** meets **B** as A packs the load and heads out to **T Street.** |
| 2 | **A** loads the **load** onto the **motorcycle** and sets off on **T Street. B** is standing beside. |
| 3 | **A** delivers the load on the **motorcycle** to people on **T Street.** |
| 4 | After completing the delivery, **A** returns home happily. |

In an embodiment, based on a user input, the electronic device 201 may obtain a relatively long input prompt, such as, for example, Table 2.

**[Table 2]**

| |
|---|
| Input prompts |
| A meets B as A packs the load and heads out to T Street. |
| A loads the load onto the motorcycle and sets off on T Street. B is standing beside. |
| A delivers the load on the motorcycle to people on T Street. |
| After completing the delivery, A returns home happily. |

In an embodiment, based on executing the script generation module, the electronic device 201 may convert the relatively long input prompt into the plurality of scripts corresponding to the plurality of scenes as shown in Table 1. In an embodiment, the electronic device 201 may display at least one main object identified from the plurality of scripts through the display 240. In an embodiment, the electronic device 201 may identify at least one main object among a plurality of objects included in the plurality of scenes, based on at least one of information associated with a frequency in a description corresponding to the plurality of scenes or information associated with a correlation between the plurality of objects. For example, the electronic device 201 may display identification information of the identified at least one main object on the window 520 associated with the identification of the main object. The identification information of the main object may include, for example, text information referring to a main object in a script. Table 3 includes at least one main object identified from scripts obtained based on the input prompts of Table 2.

**[Table 3]**

| |
|---|
| Main objects |
| T Street, A, load, B, motorcycle |

In an embodiment, fonts corresponding to displayed main objects may be different from each other. For example, each of the main objects may be distinguished by a different color or a different font.

Referring to FIG. 5B, the electronic device 201 may provide content associated with a main object through the display 240. Referring to reference numerals 570a and 570b, the electronic device 201 may display a window 530 associated with identification information of the main object through the display 240. Referring to reference numeral 570a, text information 571a indicating main object "A" may be displayed on the window 530 associated with the identification information of the main object. Referring to reference numeral 570b, text information 571b indicating main object "T Street" may be displayed on the window 530 associated with the identification information of the main object.

In an embodiment, the electronic device 201 may display a window 540 associated with a prompt of the main object through the display 240. The electronic device 201 may display at least one display object (e.g., an icon or text) on at least a partial area of the window 540 associated with the prompt of the main object. The at least one display object may include, for example, a display object 541 associated with refreshing of the main object, a display object 543 associated with a request to a previous step, or a display object 545 associated with approval of the prompt of the main object. The electronic device 201 may perform an operation corresponding to the at least one display object, based on a user input for the at least one display object. The user input for the at least one display object may be a touch input, but is not limited thereto. For example, the electronic device 201 may obtain a preview image of the main object corresponding to a prompt 573a or 573b of the main object, based on a user input for the display object 541 associated with refreshing of the main object. The electronic device 201 may identify a modified prompt corresponding to the main object, based on a user input associated with modification of the prompt corresponding to the main object. The electronic device 201 may obtain a preview image of the main object obtained from the modified prompt, based on the user input for the display object 541 associated with refreshing of the main object. The electronic device 201 may display the obtained preview image on a window 550 associated with the preview image of the main object. The electronic device 201 may store a plurality of preview images and/or prompts corresponding to the main object obtained based on a plurality of user inputs for the display object 541 associated with refreshing. The electronic device 201 may obtain a plurality of candidate images corresponding to one main object by storing the plurality of preview images. For example, the plurality of candidate images corresponding to the one main object may be stored as a type of library, and there is no limitation thereto. In an embodiment, the operation of obtaining, by the electronic device 201, the preview image of the main object based on the user input associated with modification of the prompt corresponding to the main object and the user input for the display object 541 associated with refreshing of the main object may be referred to as a "refresh operation of a preview image corresponding to a main object". In an embodiment, the electronic device 201 may perform the refresh operation of the preview image corresponding to the main object, based on an on-device model. The electronic device 201 may obtain an image corresponding to the main object, based on communication with an AI model outside the electronic device 201, based on a user input for the display object 545 associated with approval of the main object. For example, an image obtained by the external AI model may have a higher resolution than an image obtained by the on-device model, but there is no limitation thereto. The electronic device 201 may display the window 510 associated with an input prompt, through the display 240, based on a user input for the display object 543 associated with the request to the previous step. The electronic device 201 may store the prompt of the main object in a main object DB (e.g., the main object DB 350 of FIG. 3), based on the user input for the display object 545 associated with approval for the prompt of the main object.

In an embodiment, the electronic device 201 may display the window 550 associated with the preview image of the main object through the display. Referring to reference numeral 570a, a preview image 575a of main object "A" obtained in response to a prompt 573a of the main object "A" may be displayed on at least a partial area of the window 550 associated with the preview image of the main object. Referring to reference numeral 570b, a preview image 575b of main object "T Street" obtained in response to a prompt 573b of the main object "T Street" may be displayed on at least a partial area of the window 550 associated with the preview image of the main object. In an embodiment, a main object generation module may be configured to provide audio information corresponding to the main object together with the preview image corresponding to the main object. The electronic device 201 may display the preview image of the main object on at least a partial area of the window 550 associated with the preview image of the main object, based on output information of the main object generation module, and output audio corresponding to the main object through a sound output module (e.g., the sound output module 155 of FIG. 1). For example, the audio corresponding to the main object may include a voice corresponding to a main person or a soundtrack corresponding to a main background. In an embodiment, the electronic device 201 may identify a user input associated with a modification request of the audio corresponding to the main object. For example, the electronic device 201 may identify the user input associated with the modification request of the audio corresponding to the main object, based on receiving of an input of text information (e.g., a prompt) associated with a description of the audio corresponding to the main object. The electronic device 201 may obtain changed audio information corresponding to the main object, based on an input prompt associated with the description of the audio corresponding to the main object and/or a script associated with the description of the audio corresponding to the main object output by the script generation module. According to an embodiment, the electronic device 201 may also change audio information corresponding to the main object, based on receiving of a user input associated with a modification request of an image of the main object. The electronic device 201 may output audio corresponding to the main object through the sound output module, based on the changed audio information. The electronic device 201 may store multiple audio files corresponding to one main object, based on a change in the audio corresponding to the main object.

In an embodiment, the electronic device 201 may display, through the display, at least one display object associated with a request for switching between main objects or storing information on a main object. The electronic device 201 may display a screen associated with another main object, based on a user input for a display object 561 associated with a request for switching to a previous screen. For example, the electronic device 201 may change a displayed screen from a screen of reference numeral 570b to a screen of reference numeral 570a. The electronic device 201 may display a screen associated with another main object, based on a user input for a display object 563 associated with a request for switching to a next screen. For example, the electronic device 201 may change a displayed screen from the screen of reference numeral 570a to the screen of reference numeral 570b. The electronic device 201 may store information associated with the main object in memory (e.g., the memory 230 of FIG. 2), based on a user input for a display object 565 associated with a request for storing information on the main object. The information associated with the main object may include, for example, a prompt of the main object and a preview image of the main object.

Referring to FIG. 5C, the electronic device 201 may display, through the display 240, a window 581 associated with a script corresponding to a scene and a window 583 associated with display of an obtained image.

Referring to reference numeral 590a, in an embodiment, the electronic device 201 may obtain an image 593a corresponding to a first scene, based on a script 591a corresponding to the first scene. The image 593a corresponding to the first scene may include, for example, A 575a, T Street 575b, B 575c, and a load 575d corresponding to main objects. In an embodiment, the electronic device 201 may obtain a video, based on sequentially connecting a first image to a fourth image.

Referring to reference numeral 590b, in an embodiment, the electronic device 201 may obtain an image 593b corresponding to a second scene, based on a script 591b corresponding to the second scene.

Referring to reference numeral 590b, in an embodiment, the electronic device 201 may obtain the image 593b corresponding to the second scene, based on the script 591b corresponding to the second scene. The image 593b corresponding to the second scene may include, for example, A 575a, T Street 575b, B 575c, the load 575d, and a motorcycle 575e corresponding to main objects.

Referring to reference numeral 590c, in an embodiment, the electronic device 201 may obtain an image 593c corresponding to a third scene, based on a script 591c corresponding to the third scene. The image 593c corresponding to the third scene may include, for example, A 575a, T Street 575b, the load 575d, and the motorcycle 575e corresponding to main objects.

Referring to reference numeral 590d, in an embodiment, the electronic device 201 may obtain an image 593d corresponding to a fourth scene, based on a script 591d corresponding to the fourth scene. The image 593d corresponding to the fourth scene may include, for example, A 575a corresponding to a main object.

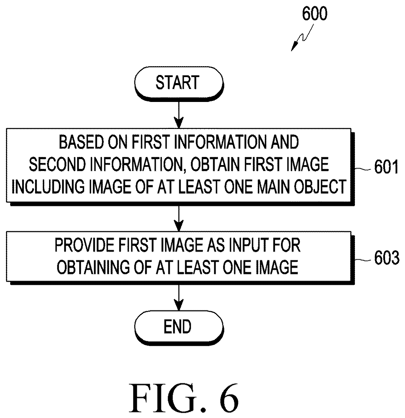

FIG. 6 is a flowchart 600 illustrating a method for obtaining a video according to various embodiments.

In the following embodiment, each operation may be performed sequentially, but is not necessarily performed sequentially. For example, the order of each operation may be changed, and at least two operations may be performed in parallel.

Referring to FIG. 6, according to an embodiment, in operation 601, the electronic device 201 (e.g., the processor 220 of FIG. 2) may obtain a first image including an image of at least one main object based on first information and information on the first content (and optionally, second information). In an embodiment, the first image may include a video corresponding to a scene in which the main object is first described in an input prompt. The first image may include an image corresponding to a scene in which a description level corresponding to the main object is higher than a configured level in the input prompt. Before obtaining a plurality of images corresponding to a plurality of scenes including the main object, the electronic device 201 may obtain the first image including the image of the at least one main object, based on the first information and the information on the first content (and optionally, second information).

According to an embodiment, in operation 603, the electronic device 201 may provide the first image as an input for obtaining at least one image. The electronic device 201 may provide the first image as an input for obtaining at least one image corresponding to at least one scene including the at least one main object. The electronic device 201 may obtain another scene including at least one object, based on providing the first image including the image of the at least one main object as the input together with the first information and the information on the first content (and optionally, second information). The electronic device 201 may consistently visualize the at least one object by obtaining the another scene including the at least one object based on the first information, the information on the first content (and optionally, second information), and the first image.

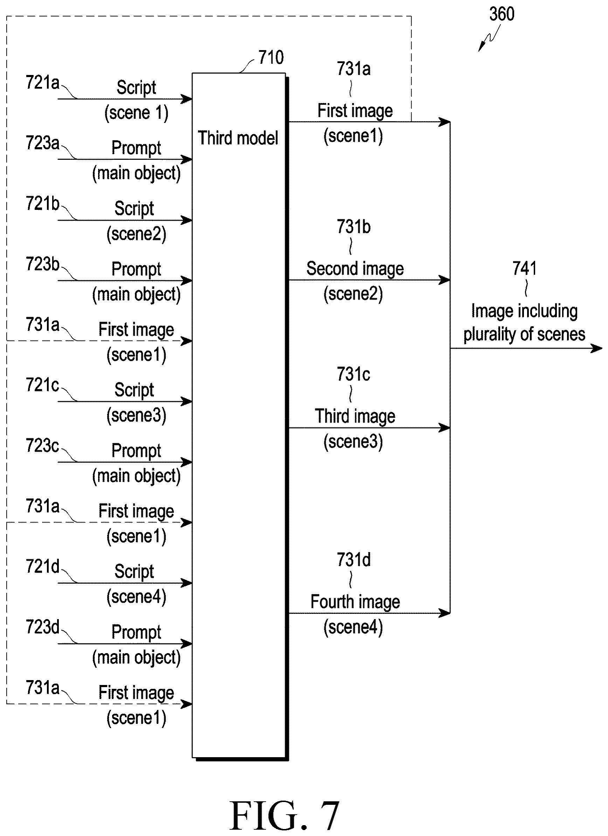

FIG. 7 is a signal flowchart illustrating a method for obtaining a video according to an embodiment.

Referring to FIG. 7, in an embodiment, the electronic device 201 may obtain an image corresponding to a prompt or a script, based on a third model 710.

In an embodiment, the electronic device 201 may obtain a first image 731a output from the third model 710 by inputting a script 721a corresponding to a first scene and a prompt 723a corresponding to a main object into the third model 710 based on executing a video generation module (e.g., the video generation module 360 of FIG. 3). The electronic device 201 may provide the first image 731a as an input for obtaining a second image 731b, a third image 731c, or a fourth image 731d, based on the first image 731a including image information corresponding to the main object. In an embodiment, the third model 710 may include a generative AI model trained to output images corresponding to a plurality of scenes, based on receiving of an input of a script and/or a prompt. The third model 710 may be implemented as a portion of the video generation module, or may be implemented outside the video generation module. When the third model 710 is implemented outside the video generation module, the third model 710 may provide the images corresponding to the plurality of scenes to the video generation module, based on receiving of an instruction from the video generation module.

In an embodiment, the electronic device 201 may obtain the second image 731b output from the third model 710 by inputting a script 721b corresponding to a second scene, a prompt 723b corresponding to the main object, and the first image 731a into the third model 710. The first image 731a may be considered representing information on the first content.

In an embodiment, the electronic device 201 may obtain the third image 731c output from the third model 710 by inputting a script 721c corresponding to a third scene, a prompt 723c corresponding to the main object, and the first image 731a into the third model 710.

In an embodiment, the electronic device 201 may obtain the fourth image 731d output from the third model 710 by inputting a script 721d corresponding to a fourth scene, a prompt 723d corresponding to the main object, and the first image 731a into the third model 710.

In an embodiment, the second image corresponding to the second scene, the third image corresponding to the third scene, and the fourth image corresponding to the fourth scene may be sequentially generated (or obtained). In an embodiment, at least a portion of the second image, the third image, or the fourth image may be generated in parallel. In an embodiment, based on at least one of the second scene, the third scene, or the fourth scene not including the main object, a prompt corresponding to the main object may not be provided as an input to the third model.

In an embodiment, the electronic device 201 may obtain an image 741 including a plurality of scenes, based on sequentially connecting of the first image 731a, the second image 731b, the third image 731c, and the fourth image 731d. In an embodiment, the electronic device 201 may generate the entire video without sequentially connecting a plurality of images, based on at least one of first information (e.g., information related to a description corresponding to a plurality of scenes), a prompt corresponding to a main object included in a main object DB (e.g., the main object DB 350 of FIG. 3), or an image corresponding to the main object included in the main object DB. The electronic device 201 may consistently visualize the main object by providing the first image 731a as an input for obtaining the second image 731b, the third image 731c, or the fourth image 731d.

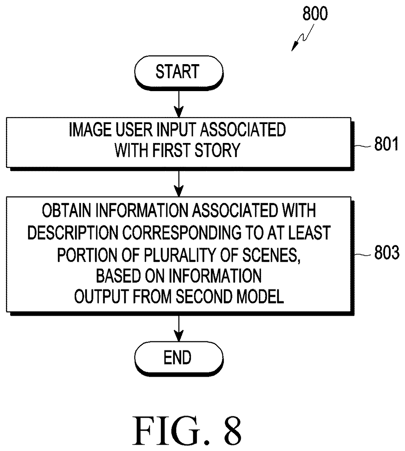

FIG. 8 is a flowchart 800 illustrating a method for obtaining information associated with a description corresponding to a plurality of scenes according to an embodiment.

In the following embodiment, each operation may be performed sequentially, but is not necessarily performed sequentially. For example, the order of each operation may be changed, and at least two operations may be performed in parallel.

Referring to FIG. 8, according to an embodiment, in operation 801, the electronic device 201 (e.g., the processor 220 of FIG. 2) may identify a user input associated with a first story. In an embodiment, the user input associated with the first story may include a relatively short input prompt. The user input associated with the first story may also include a relatively long input prompt including a description corresponding to a plurality of scenes. The type of the user input may include at least one of text, an image (e.g., a still image or a video), or audio (e.g., a voice).

According to an embodiment, in operation 803, the electronic device 201 may obtain information associated with a description corresponding to at least a portion of the plurality of scenes, based on information output from a second model. The electronic device 201 may input information corresponding to the user input into the second model trained to output text information associated with the description corresponding to the plurality of scenes based on receiving of an input of information associated with a story, so as to obtain text information associated with the description corresponding to the at least a portion of the plurality of scenes, based on the information output from the second model. For example, the electronic device 201 may obtain a relatively long script, based on a relatively short input prompt. The electronic device 201 may obtain a plurality of scripts corresponding to the plurality of scenes, respectively, based on the relatively long input prompt including the description corresponding to the plurality of scenes. The electronic device 201 may obtain a script for identifying a main object, based on an artificial intelligence model trained to identify first information associated with the description corresponding to the plurality of scenes, based on receiving of the user input.

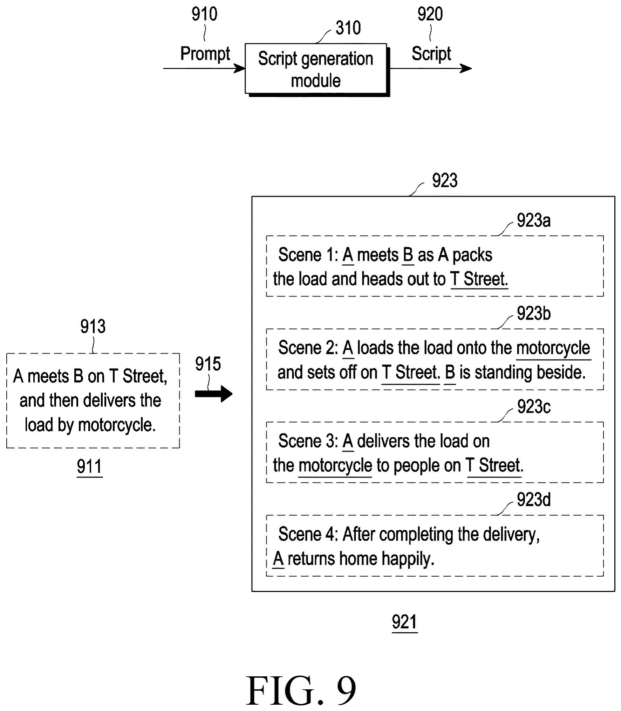

FIG. 9 illustrates a method for obtaining information associated with a description corresponding to a plurality of scenes according to an embodiment.

Referring to FIG. 9, according to an embodiment, the script generation module 310 may output a script 920, based on receiving of an input of a prompt 910.

In an embodiment, referring to reference numeral 911, the script generation module 310 may receive an input of a relatively short prompt 913. The script generation module may output a script 923 including a plurality of scenes based on the prompt 913 (915).

In an embodiment, referring to reference numeral 921, the script 923 output by the script generation module 310 may include a plurality of scripts corresponding to the plurality of scenes, respectively. For example, the plurality of scripts may include a script 923a corresponding to a first scene, a script 923b corresponding to a second scene, a script 923c corresponding to a third scene, and a script 923d corresponding to a fourth scene.

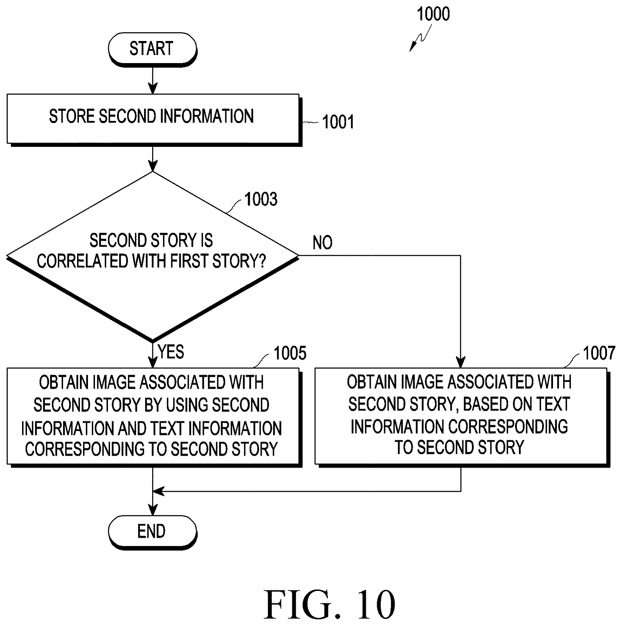

FIG. 10 is a flowchart 1000 illustrating a method for obtaining another image based on stored information corresponding to a main object according to an embodiment.

In the following embodiment, each operation may be performed sequentially, but is not necessarily performed sequentially. For example, the order of each operation may be changed, and at least two operations may be performed in parallel.

Referring to FIG. 10, according to an embodiment, in operation 1001, the electronic device 201 (e.g., the processor 220 of FIG. 2) may store second information corresponding to at least one main object. For example, the electronic device 201 may store the second information associated with a main object included in a video in a main object DB (e.g., the main object DB 350 of FIG. 3). In an embodiment, the electronic device 201 may store a video corresponding to a first story obtained by a video generation module (e.g., the video generation module 360 of FIG. 3) in memory (e.g., the non-volatile memory 134 of FIG. 1).

In an embodiment, in operation 1003, the electronic device 201 may identify whether a second story is correlated with the first story. Based on identifying of a request for generating an image associated with the second story, the electronic device 201 may identify whether there is a correlation between the first story and the second story. For example, the electronic device 201 may identify whether text information corresponding to the second story is correlated with text information corresponding to the first story, but there is no limitation thereto. In an embodiment, the electronic device 201 may identify, based on comparing the similarity between a script corresponding to the first story and a script corresponding to the second story, that the second story is correlated with the first story when the similarity between the scripts exceeds a configured threshold. The electronic device 201 may identify that the second story is not correlated with the first story, based on identifying that the similarity between the scripts is less than or equal to the configured threshold. In an embodiment, the electronic device 201 may identify whether the second story is correlated with the first story, based on comparing the similarity between information associated with at least one main object included in the first story and information associated with at least one main object included in the second story. For example, the electronic device 201 may identify that the second story is correlated with the first story, based on identifying that the similarity between the information associated with the main object exceeds the configured threshold. The electronic device 201 may identify that the second story is not correlated with the first story, based on identifying that the similarity between the information associated with the main object is less than or equal to the configured threshold. In an embodiment, based on identifying that the second story is not correlated with the first story (operation 1003-No), in operation 1007, the electronic device 201 may obtain an image associated with the second story, based on the text information corresponding to the second story. The electronic device 201 may not provide information associated with the first story as an input for obtaining the image associated with the second story.

In an embodiment, a prompt corresponding to a main character and/or a main background of the first story may be stored in the main object DB. An image corresponding to the main character and/or the main background of the first story may be stored in the main object DB. Based on identifying that at least a portion of a plurality of main objects identified based on the text information corresponding to the second story corresponds to information stored in the main object DB, the electronic device 201 may generate (or obtain) a video associated with the second story, based on the information stored in the main object DB. For example, when the main character or the main background of the first story corresponds to a main character or a main background of the second story, the second story may be identified as being correlated with related to the first story.

In an embodiment, when the main character of the second story corresponds to the main character of the first story and a narrative time point of the second story is different from a narrative time point of the first story, the electronic device 201 may generate the video associated with the second story, based on the information stored in the main object DB. For example, when the narrative time point of the first story is associated with the main character's youth and the narrative time point of the second story is associated with the main character's old age days, the second story may be identified as being associated with the first story.

In an embodiment, when a narrative of the second story corresponds to a narrative of the first story and the main character of the second story is different from the main character of the first story, the electronic device 201 may generate the video associated with the second story, based on the information stored in the main object DB. The narrative may be associated with, for example, a main background and/or the beginning of a story. Based on the narrative of the second story being similar to that of the first story, the main character of the first story corresponding to a good role, and the main character of the second story corresponding to an evil role, the electronic device 201 may generate the video associated with the second story by using the information stored in the main object DB, and there is no limitation thereto. Based on the narrative of the second story being similar to that of the first story, and the ending of the second story being different from the ending of the first story, the electronic device 201 may also generate the video associated with the second story by using the information stored in the main object DB.

In an embodiment, based on the main object and/or the narrative of the second story corresponding to the main object and/or the narrative of the first story, and a genre of the second story being different from a genre of the first story, the electronic device 201 may generate the video associated with the second story, based on the information stored in the main object DB. For example, based on the main object and/or the narrative of the second story corresponding to the main object and/or the narrative of the first story, the genre of the second story corresponding to an advertisement, and the genre of the first story corresponding to a movie, the electronic device 201 may generate an advertisement image associated with the second story, based on the information stored in the main object DB.

In an embodiment, based on the main object and/or the narrative of the second story corresponding to the main object and/or the narrative of the first story, and the number of scenes included in the second story being less than the number of scenes included in the first story, the electronic device 201 may generate the video associated with the second story, based on the information stored in the main object DB. For example, based on the second story being a summary of the first story, the electronic device 201 may generate the video associated with the second story, based on obtaining information associated with the main object included in the first story from the main object DB.

In an embodiment, in operation 1005, the electronic device 201 may obtain the image associated with the second story by using the text information corresponding to the second story and the second information. Based on identifying that the second story is correlated with the first story (operation 1003-Yes), the electronic device 201 may obtain the image associated with the second story by using the second information. The electronic device 201 may obtain another image based on the information stored in the main object DB, so as to reduce a delay that may occur due to the obtaining of the image compared to a case where another image is obtained without the main object DB.

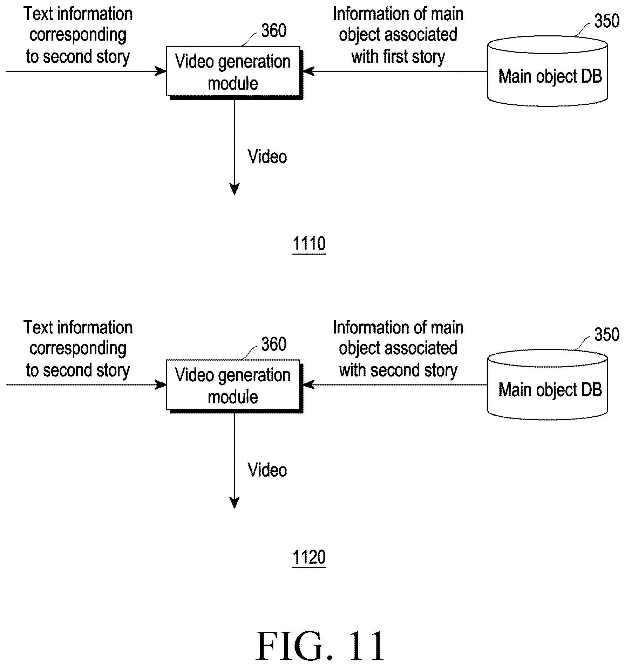

FIG. 11 is a signal flowchart illustrating a method for obtaining another image based on stored information corresponding to a main object according to an embodiment.

Referring to FIG. 11, in an embodiment, the electronic device 201 may obtain a video based on different manners depending on whether text information corresponding to a second story is correlated with text information corresponding to a first story.

Referring to reference numeral 1110, based on identifying that the text information corresponding to the second story is correlated with the text information corresponding to the first story, the video generation module 360 may obtain a video based on the text information corresponding to the second story and second information of a main object associated with the first story obtained from the main object DB 350.

Referring to reference numeral 1120, based on identifying that the text information corresponding to the second story is not correlated with the text information corresponding to the first story, the video generation module 360 may obtain a video based on the text information corresponding to the second story and information on the main object associated with the second story obtained from the main object DB 350.

In an embodiment, when a correlation is identified, the video generation module 360 may reduce a delay that occurs to obtain a video by using the information stored in the main object DB 350 in order to obtain another image.

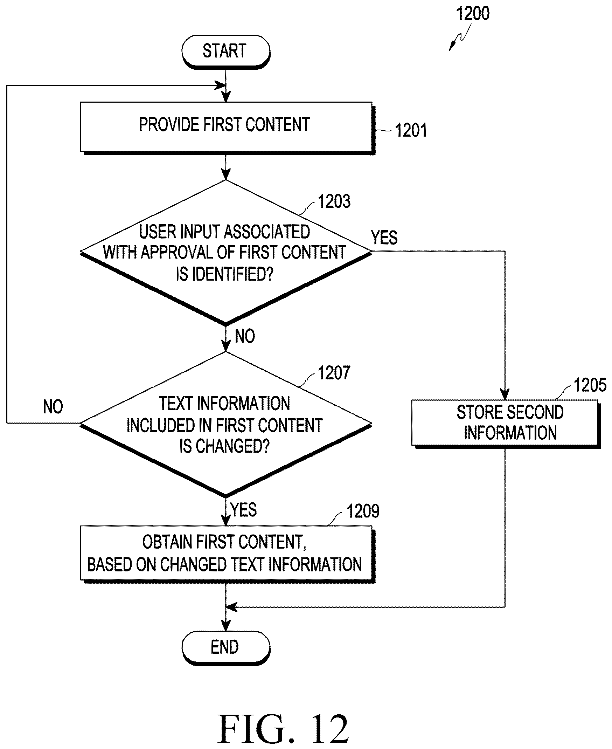

FIG. 12 is a flowchart 1200 illustrating a method for providing content associated with a main object according to an embodiment.

In the following embodiment, each operation may be performed sequentially, but is not necessarily performed sequentially. For example, the order of each operation may be changed, and at least two operations may be performed in parallel.

Referring to FIG. 12, according to an embodiment, in operation 1201, the electronic device 201 (e.g., the processor 220 of FIG. 2) may provide first content. The electronic device 201 may provide the first content including text information associated with a description corresponding to at least one main object. In an embodiment, the electronic device 201 may provide the first content including a preview image corresponding to the at least one main object. For example, a resolution of a main object included in the preview image may be lower than a resolution of a main object included in an obtained image. In an embodiment, the electronic device 201 may provide audio information as at least a portion of the first content corresponding to the at least one main object through a sound output module (e.g., the sound output module 155 of FIG. 1). A sampling rate corresponding to the audio information included in the first content may be relatively low. For example, the sampling rate corresponding to the audio information included in the first content may be lower than a sampling rate corresponding to audio information included in an image obtained based on the first content. A playback duration corresponding to the audio information included in the first content may be relatively short. For example, the playback duration corresponding to the audio information included in the first content may be shorter than a playback duration corresponding to the audio information included in the image obtained based on the first content, and there is no limitation thereto. For example, the image obtained based on the first content may be generated based on a user input associated with a video generation request. The electronic device 201 may configure a resolution of a preview image output by a main object generation module to have a value lower than that of a resolution of an image output by a video generation module, in order to reduce a delay that occurs by executing an on-device module. The electronic device 201 may control a display (e.g., the display 240 of FIG. 2) to display the first content obtained based on the execution of the main object generation module (e.g., the main object generation module 330 of FIG. 3).

In an embodiment, in operation 1203, the electronic device 201 may identify whether a user input associated with approval of the first content is identified. In an embodiment, the electronic device 201 may control the display 240 to display a display object associated with approval of the first content. The electronic device 201 may identify the user input associated with approval of the first content, based on identifying of a user input for the display object associated with approval of the first content. The user input for the display object may include a touch input, but is not limited thereto. In an embodiment, in operation 1205, the electronic device 201 may store second information based on identifying of the user input associated with approval of the first content (operation 1203-Yes). The electronic device 201 may store the second information associated with at least one main object in a main object DB (e.g., the main object DB 350).

In an embodiment, in operation 1207, the electronic device 201 may identify whether the text information included in the first content is changed, based on the user input associated with approval of the first content not being identified (operation 1203-No). Based on identifying a change in the text information included in the first content, the electronic device 201 may identify the second information corresponding to the at least one main object, based on a user input for the first content. In an embodiment, the electronic device 201 may control a display to display a window associated with an input prompt. The electronic device 201 may identify that the text information included in the first content is changed, based on identifying of a user input for the window associated with the input prompt. The user input for the window associated with the input prompt may include a touch input on at least a partial area of the window and a text input associated with a change in a description corresponding to the main object, but is not limited thereto. In an embodiment, in operation 1209, based on identifying that the text information included in the first content is changed (operation 1207-Yes), the electronic device 201 may obtain the first content, based on the changed text information. The electronic device 201 may control the display to display the first content obtained based on the changed text information.

In an embodiment, the electronic device 201 may provide the first content based on identifying that the text information included in the first content is not changed (operation 1207-No). For example, the electronic device 201 may obtain an image corresponding to the main object, based on a script corresponding to the main object included in the first content provided by operation 1201. The electronic device 201 may obtain images of different main objects even when a prompt corresponding to the main object is the same, based on executing the main object generation module 330. The electronic device 201 may repeat an operation of obtaining a preview image corresponding to a main object until the user input associated with approval of the first content is identified (operation 1203-Yes).

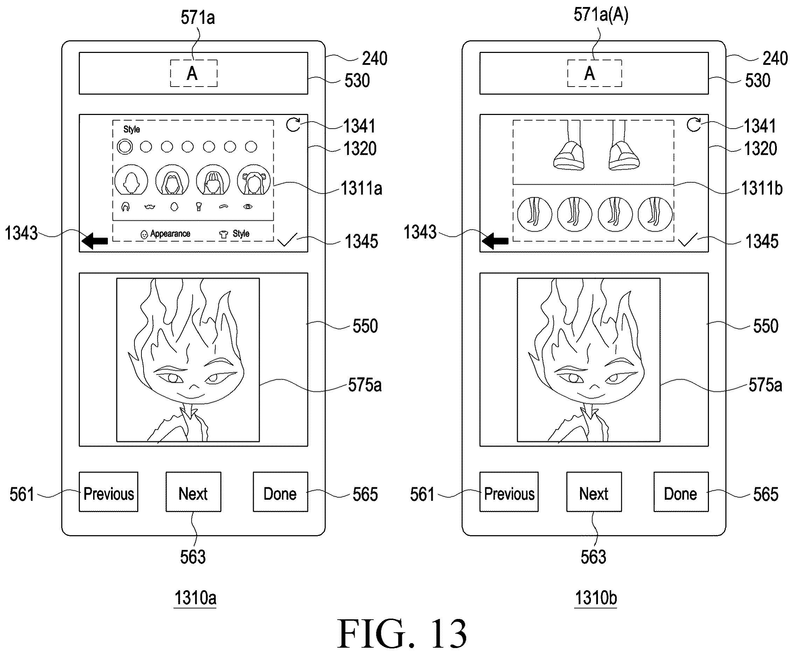

FIG. 13 illustrates a method for providing content associated with a main object according to an embodiment.

In an embodiment, the electronic device 201 may display, through the display 240, a window 1320 associated with a change in the shape of a main object. For example, the electronic device may display the window 1320 associated with the change in the shape of the main object, based on a user input for a display object displayed on a window (e.g., the window 540) associated with a prompt of the main object of FIG. 5B. The user input may include an input associated with selecting an option for changing the shape of the main object or an input associated with editing a prompt associated with a description of the main object. The electronic device 201 may display at least one display object on at least a partial area of the window 1320 associated with the change in the shape of the main object. The at least one display object may include, for example, a display object 1341 associated with refreshing of the main object, a display object 1343 associated with a request to a previous step, or a display object 1345 associated with approval of the prompt of the main object. The electronic device 201 may perform an operation corresponding to the at least one display object, based on a user input for the at least one display object. The user input for the at least one display object may be a touch input, but is not limited thereto. For example, the electronic device 201 may obtain a preview image 575a of the main object, based on a user input for the display object 1341 associated with refreshing of the main object. The electronic device 201 may display the preview image of the main object, of which a hairstyle or outfit has been changed, on the window 550 associated with the preview image of the main object, based on a user input for display objects 1311a associated with a change in the hairstyle of the main object or display objects 1311b associated with a change in the outfit of the main object and the user input for the display object 1341 associated with refreshing of the main object. The electronic device 201 may display a window associated with an input prompt, through the display 240, based on a user input for the display object 1343 associated with the request to the previous step. The electronic device 201 may store the prompt of the main object in a main object DB (e.g., the main object DB 350 of FIG. 3), based on a user input for the display object 1345 associated with approval for the prompt of the main object.

Referring to reference numeral 1310a, the electronic device 201 may display, through the display 240, the display objects 1311a associated with the change in the hairstyle of the main object on at least a partial area of the window 1320 associated with the change in the shape of the main object. For example, the electronic device 201 may display the preview image of the main object, of which the hairstyle has been changed, on the window 550 associated with the preview image of the main object, based on a user input associated with selection of an option for the display objects 1311a associated with the change in the hairstyle of the main object and a user input associated with the display object 1341 associated with refreshing of the main object.

Referring to reference numeral 1310b, the electronic device 201 may display, through the display 240, the display objects 1311b associated with the change in the outfit of the main object on at least a partial area of the window 1320 associated with the change in the shape of the main object. For example, the electronic device 201 may display the preview image of the main object, of which the outfit has been changed, on the window 550 associated with the preview image of the main object, based on a user input associated with selection of an option for the display objects 1311b associated with the change in the outfit of the main object and a user input associated with the display object 1341 associated with refreshing of the main object.

The electronic device 201 may store image information corresponding to the main object in the main object DB, based on identifying that the hairstyle and/or outfit of the main object has been determined.

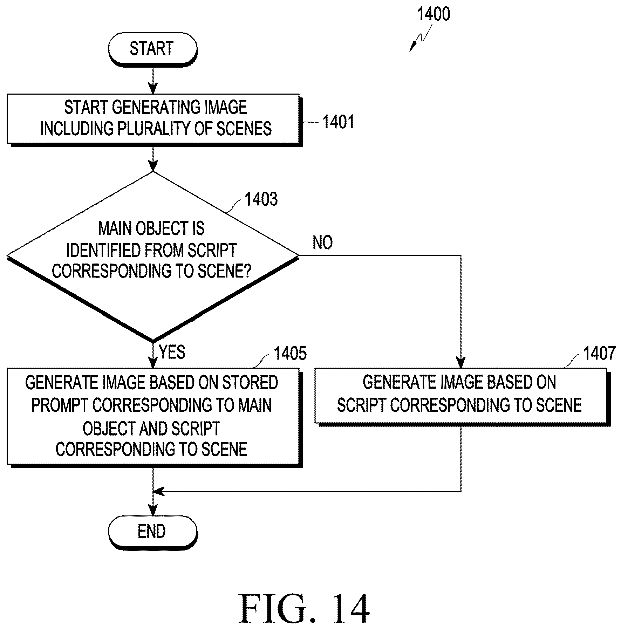

FIG. 14 is a flowchart illustrating a method for obtaining an image according to an embodiment.

In the following embodiment, each operation may be performed sequentially, but is not necessarily performed sequentially. For example, the order of each operation may be changed, and at least two operations may be performed in parallel.

Referring to FIG. 14, according to an embodiment, in operation 1401, the electronic device 201 (e.g., the processor 220 of FIG. 2) may start generating an image including a plurality of scenes. In an embodiment, in operation 1403, the electronic device 201 may identify whether a main object is identified from a script corresponding to a scene. The electronic device 201 may identify whether at least one main object identified based on executing a main object analysis module (e.g., the main object analysis module 320 of FIG. 3) is identified within the script corresponding to the scene.

In an embodiment, based on identifying that the main object is not identified from the script corresponding to the scene (operation 1403-No), in operation 1407, the electronic device 201 may generate an image based on the script corresponding to the scene. The electronic device 201 may generate the image based on the script corresponding to the scene without an operation of transmitting a query for information associated with the main object to a main object DB (e.g., the main object DB 350 of FIG. 3).

In an embodiment, based on identifying that the main object is identified from the script corresponding to the scene (operation 1403-Yes), in operation 1405, the electronic device 201 may generate an image based on a stored prompt corresponding to the main object and the script corresponding to the scene. The electronic device 201 may obtain the prompt corresponding to the main object from the main object DB. The electronic device 201 may consistently visualize the main object by generating the image based on the obtained prompt corresponding to the main object and the script corresponding to the scene. In an embodiment, the electronic device 201 may obtain the image including the plurality of scenes, based on information output from the third model by inputting first information and second information into a third model trained to generate an image based on receiving of an input of information associated with a description.

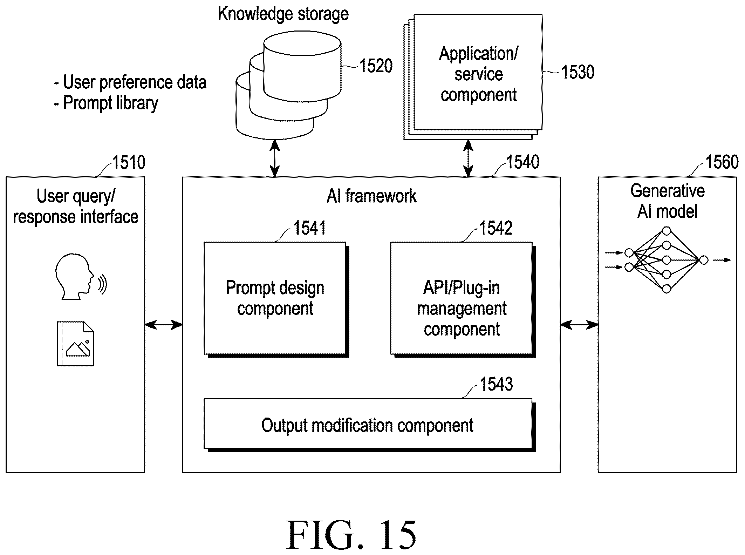

FIG. 15 illustrates a generative artificial intelligence model according to an embodiment.

Referring to FIG. 15, a user query/response interface 1510, an application/service component 1530, a knowledge storage 1520, an AI framework 1540, and a generative AI model 1560 (e.g., the generative AI model 340 of FIG. 3) may be stored in the memory 230 (e.g., the memory 230 of FIG. 2) or stored in a separate server. At least a portion of the user query/response interface 1510, the application/service component 1530, the knowledge storage 1520, the AI framework 1540, or the generative AI model 1560 may be implemented in software or hardware.

According to an embodiment, the user query/response interface 1510 may receive an input of a user. The input of the user may be in the form of natural language, an image, and/or a video, but is not limited thereto. In addition, context information may also be transmitted when the input of the user is transmitted. The context information may include various additional information at the time of the input of the user. For example, the additional information may include information on an application currently being used by the user or location information of the user. In addition, the user input may also be in the form of a mixture of the above-described natural language, image, sound, and context information. In addition, the user input may also be in a non-natural language form such as selecting a menu. The user query/response interface 1510 may output a resulting product of a generative artificial intelligence system to the user. The output can be in a natural language form or a specific content form, and can also be provided in a form such as an action requested by the user. The user query/response interface 1510 may output a resulting product of the generative artificial intelligence system to the user. The output can be in a natural language form or a specific content form, and can also be provided in a form such as an action requested by the user.

The AI framework 1540 may receive an input of the user, and may coordinate and control each component required to perform the intention of the user based on a query of the user.

A user input received from the user query/response interface 1510 may be transmitted to a prompt design component 1541. The prompt design component 1541 may be used to generate a prompt suitable for inputting the user input into a large language model (LLM), a large vision model (LVM), or a large multimodal model (LMM). The prompt design component 1541 may be an AI component which uses a machine learning algorithm or a neural network to develop a better prompt over time. The prompt design component 1541 may access a knowledge component including user preference data, a prompt library, and a prompt example, based on the user input, to generate a prompt, and may transmit the generated prompt to the large language model (LLM) or the large multimodal model (LMM).

An API/Plug-in management component 1542 may perform the role of communicating with external information when there is a request for additional information at the time of transmitting a user input as an input of a generative model. The API/Plug-in management component 1542 may establish a channel which is communicable with the outside of an AI interface through an API, and may allow access to various data sources (e.g., the knowledge storage 1520) through the established channel. In addition, the API/Plug-in management component 1542 may request a corresponding action from the application/service component 1530 through the API when an action for ultimately executing a user input, rather than an intermediate result, is required to be performed in an application or a service. Information obtained from the outside may be used to generate a prompt in the prompt design component 1541 together with a user input, or may be transmitted as an input of the generative model.

An output modification component (or also called a refiner component) 1543 may finely tune a result output from the generative model. For example, the output modification component 1543 may verify whether content generated through an LLM and/or an LMM is irrelevant, includes biased content, or includes harmful content. In addition, the output modification component 1543 may determine whether the content matches the user's desired resulting product to some extent and, if an additional process is required, may also proceed with the corresponding process. The output modification component 1543 may additionally configure a hint to avoid an unwanted output, and provide the hint to the user.

The generative AI model 1560 may generally refer to an artificial intelligence neural network which generates a new type of data based on user input information. The generative AI model 1560 may include a model which generates an image and/or a model which generates language. A representative model which generates an image includes a generative adversarial network (GAN) and a variational auto encoder (VAE), and an example of the model includes a diffusion-based generative model using a Transformer structure and the VAE. A model which generates language is a model trained to output the most appropriate output value statistically based on an input value, and a representative example of the model includes a model such as CHAT-GPT 3 or CHAT-GPT 4. There are also large multimodal models (LMMs) which may recognize various forms of data input such as text, an image, and audio, and generate new data corresponding thereto.

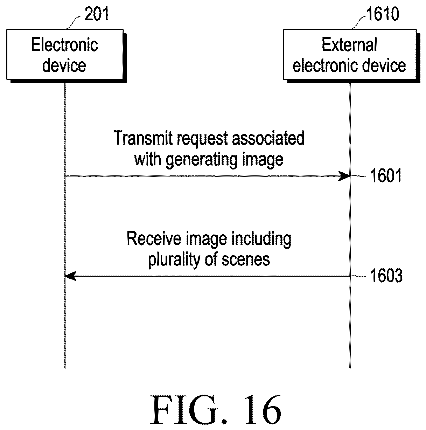

FIG. 16 is a flowchart illustrating a method for obtaining an image according to an embodiment.

In the following embodiment, each operation may be performed sequentially, but is not necessarily performed sequentially. For example, the order of each operation may be changed, and at least two operations may be performed in parallel.

Referring to FIG. 16, according to an embodiment, in operation 1601, the electronic device 201 (e.g., the processor 220 of FIG. 2) may transmit a request associated with generating an image to an external electronic device 1610 including a third model trained to generate an image, based on receiving of an input of information associated with a description. The electronic device 201 may transmit, to the external electronic device 1610, a request associated with generating an image, the request including first information and second information. The external electronic device 1610 may generate (or obtain) an image including a plurality of scenes, based on the information included in the request and the third model. In an embodiment, in operation 1603, the electronic device 201 may receive, from the external electronic device 1610, the image including the plurality of scenes generated by the external electronic device 1610 in response to the request. The electronic device 201 may obtain the image including the plurality of scenes, based on the first information and the second information. The electronic device 201 may provide (or reproduce) the obtained image through a display (e.g., the display 240 of FIG. 2). The electronic device 201 may obtain the image including the plurality of scenes through the external electronic device 1610 which provides a cloud service associated with generation of a video.

An electronic device (e.g., the electronic device 201 of FIG. 2) according to an embodiment may include memory (e.g., the memory 230 of FIG. 2) storing instructions, and a processor (e.g., the processor 220 of FIG. 2). The instructions, when executed by the processor 220, may cause the electronic device 201 to identify first information associated with a description corresponding to a plurality of scenes. The instructions, when executed by the processor 220, may cause the electronic device 201 to identify, based on the first information, information associated with a description corresponding to at least one main object included in at least a portion of the plurality of scenes. The instructions, when executed by the processor 220, may cause the electronic device 201 to obtain, based on information output from a first model by inputting the information associated with the description corresponding to the at least one main object into the first model trained to output content based on receiving information associated with a scene first content corresponding to the at least one main object. The instructions, when executed by the processor 220, may cause the electronic device 201 to identify second information corresponding to the at least one main object, based on a user input for the first content. The instructions, when executed by the processor 220, may cause the electronic device 201 to obtain a video including the plurality of scenes, based on the first information and the second information.

In an embodiment, the instructions, when executed by the processor 220, may cause the electronic device 201 to obtain a first image including an image of the at least one main object, based on the first information and the second information. The instructions, when executed by the processor 220, may cause the electronic device 201 to provide the first image as an input for obtaining at least one image corresponding to at least one scene including the at least one main object.

In an embodiment, the instructions, when executed by the processor 220, may cause the electronic device 201 to, as at least part of the identifying of the information associated with the description corresponding to the at least one main object included in the at least a portion of the plurality of scenes based on the first information, identify the at least one main object among a plurality of objects included in the plurality of scenes, based on at least one of information associated with a frequency in the description corresponding to the plurality of scenes or information associated with a correlation between the plurality of objects.

In an embodiment, the instructions, when executed by the processor 220, may cause the electronic device 201 to identify a user input associated with a first story as at least part of the identifying of the first information associated with the description corresponding to the plurality of scenes. The instructions, when executed by the processor 220, may cause the electronic device 201 to, as at least part of the identifying of the first information associated with the description corresponding to the plurality of scenes, obtain, based on information output from a second model by inputting information corresponding to the user input into the second model trained to output text information associated with the description corresponding to the plurality of scenes based on receiving information associated with a story text information associated with a description corresponding to at least a portion of the plurality of scenes.

In an embodiment, the instructions, when executed by the processor 220, may cause the electronic device 201 to store the second information corresponding to the at least one main object. The instructions, when executed by the processor 220, may cause the electronic device 201 to identify, based on identifying a request for generating a video associated with a second story, whether the second story is correlated with the first story. The instructions, when executed by the processor 220, may cause the electronic device 201 to, based on identifying that the second story is correlated with the first story, obtain the video associated with the second story using the second information.

In an embodiment, the instructions, when executed by the processor 220, may cause the electronic device 201 to provide the first content including text information associated with the description corresponding to the at least one main object. The instructions, when executed by the processor 220, may cause the electronic device 201 to, as at least part of the identifying of the second information corresponding to the at least one main object based on the user input for the first content, identify a change in the text information included in the first content.

In an embodiment, the instructions, when executed by the processor 220, may cause the electronic device 201 to provide the first content including a preview image corresponding to the at least one main object.

In an embodiment, a resolution of a main object included in the preview image may be lower than a resolution of a main object included in the obtained video.

In an embodiment, the instructions, when executed by the processor 220, may cause the electronic device 201 to, as at least part of the obtaining of the video including the plurality of scenes based on the first information and the second information, obtain the video including the plurality of scenes, based on information output from a third model by inputting the first information and the second information into the third model trained to generate a video based on receiving of information associated with a description.

In an embodiment, the instructions, when executed by the processor 220, may cause the electronic device 201 to, as at least part of the obtaining of the video including the plurality of scenes based on the first information and the second information, transmit, to an external electronic device including a third model trained to generate an image based on receiving information associated with a description, a request associated with generating an image, the request including the first information and the second information. The instructions, when executed by the processor 220, may cause the electronic device 201 to, as at least part of the obtaining of the video including the plurality of scenes based on the first information and the second information, receive, from the external electronic device, the video including the plurality of scenes generated by the external electronic device in response to the request.

In an embodiment, the at least one main object may include at least one of a character or audio information corresponding to the character.

In an embodiment, at least part of the obtaining of the first content corresponding to the at least one main object and at least part of the obtaining of the video including the plurality of scenes may be performed in parallel.

A method according to an embodiment may include identifying first information associated with a description corresponding to a plurality of scenes. The method may include identifying, based on the first information, information associated with a description corresponding to at least one main object included in at least a portion of the plurality of scenes. The method may include obtaining, based on information output from a first model by inputting the information associated with the description corresponding to the at least one main object into the first model configured to output content based on receiving information associated with a scene, first content corresponding to the at least one main object. The method may include identifying second information corresponding to the at least one main object, based on a user input for the first content. The method may include obtaining a video including the plurality of scenes, based on the first information and the second information.

In an embodiment, the method may further include obtaining, based on the first information and the second information, a first image including an image of the at least one main object. The method may further include providing the first image as an input for obtaining at least one image corresponding to at least one scene including the at least one main object.

In an embodiment, the identifying of the information associated with the description corresponding to the at least one main object included in the at least a portion of the plurality of scenes based on the first information may include identifying the at least one main object among a plurality of objects included in the plurality of scenes, based on at least one of information associated with a frequency in the description corresponding to the plurality of scenes or information associated with a correlation between the plurality of objects.

In an embodiment, the identifying of the first information associated with the description corresponding to the plurality of scenes may include identifying a user input associated with a first story. The identifying of the first information associated with the description corresponding to the plurality of scenes may include obtaining, based on information output from a second model by inputting information corresponding to the user input into the second model trained to output text information associated with the description corresponding to the plurality of scenes based on receiving information associated with a story, text information associated with a description corresponding to at least a portion of the plurality of scenes.

In an embodiment, the method may further include storing the second information corresponding to the at least one main object. The method may further include identifying, based on identifying a request for generating a video associated with a second story, whether the second story is correlated with the first story. The method may further include obtaining the video associated with the second story using the second information, based on identifying that the second story is correlated with the first story.

In an embodiment, the method may further include providing the first content including text information associated with the description corresponding to the at least one main object. The identifying of the second information corresponding to the at least one main object based on the user input for the first content may include identifying a change in the text information included in the first content.

In an embodiment, the method may further include providing the first content including a preview image corresponding to the at least one main object.

In an embodiment, the obtaining of the video including the plurality of scenes based on the first information and the second information may include obtaining the video including the plurality of scenes, based on information output from a third model by inputting the first information and the second information into the third model configured to generate an image based on receiving information associated with a description.

In an embodiment, the obtaining of the video including the plurality of scenes based on the first information and the second information may include transmitting, to an external electronic device including a third model configured to generate an image based on receiving information associated with a description, a request associated with generating a video, the request including the first information and the second information. The obtaining of the video including the plurality of scenes based on the first information and the second information may include receiving, from the external electronic device, the video including the plurality of scenes generated by the external electronic device in response to the request.

In a non-transitory computer-readable medium recording computer-executable instructions that, when executed by a processor 220 of an electronic device 201, may cause the electronic device 201 to receive a request associated with obtaining a video including a plurality of scenes. The computer-executable instructions, when executed by the processor 220 of the electronic device 201, may cause the electronic device 201 to obtain first content corresponding to at least one main object to be included in the video, based on at least a portion of a description associated with the video identified based on the request. The computer-executable instructions, when executed by the processor 220 of the electronic device 201, may cause the electronic device 201 to provide the first content through a display. The computer-executable instructions, when executed by the processor 220 of the electronic device 201, may cause the electronic device 201 to identify information corresponding to the at least one main object, based on a user input for the first content. The computer-executable instructions, when executed by the processor 220 of the electronic device 201, may cause the electronic device 201 to obtain the video including the plurality of scenes, based on the description and the information corresponding to the at least one main object.

In addition, a structure of data used in the above-described embodiment of the document may be recorded in a computer-readable recording medium through various means. The computer-readable recording medium includes storage media such as a magnetic storage medium (e.g., a ROM, a floppy disk, or a hard disk) and an optical readable medium (e.g., a CD-ROM or DVD).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201) comprising:
memory (230) storing instructions; and
a processor (220),
wherein the instructions, when executed by the processor (220), cause the electronic device (201) to:
identify first information associated with a description corresponding to a plurality of scenes,
based on the first information, identify at least one main object included in at least a portion of the plurality of scenes,
based on information output from a first model by inputting a description corresponding to the at least one main object into the first model trained to output content based on receiving information associated with a scene, obtain first content corresponding to the at least one main object, and
based on the first information and information on the first content, obtain a video including the plurality of scenes, wherein the at least one main object is consistently visualized in the at least a portion of the plurality of scenes.

2. The electronic device (201) of claim 1, wherein the instructions, when executed by the processor (220), cause the electronic device (201) to:
based on a user input for the first content, identify second information corresponding to the at least one main object,
wherein the video is further obtained based in the second information.

3. The electronic device (201) of claim 1 or 2, wherein the instructions, when executed by the processor (220), cause the electronic device (201) to:
based on the first information and the information on the first content, and, if dependent on claim 2, the second information, obtain a first image including an image of the at least one main object, and
provide the first image as an input for obtaining at least one image corresponding to at least one scene including the at least one main object.

4. The electronic device (201) of any of claims 1 to 3, wherein the instructions, when executed by the processor (220), cause the electronic device (201) to:
as at least part of identifying at least one main object included in at least the portion of the plurality of scenes based on the first information, identify the at least one main object among the plurality of objects included in the plurality of scenes based on at least one of
a frequency at which information corresponding to the main object is identified in first information,
a relative location of the information corresponding to the main object in the first information,
a relative frequency of the information corresponding to the main object in an information similar to the first information, and
a description level of a description associated with the main object in the first information.

5. The electronic device (201) of any one of claims 1 to 4,
wherein the instructions, when executed by the processor (220), cause the electronic device (201) to, as at least part of identifying the first information associated with the descriptions corresponding to the plurality of scenes:
identify a user input associated with a first story, wherein a story includes a description concerning a plurality of scenes, and
based on information output from a second model by inputting information corresponding to the user input into the second model trained to output text information associated with descriptions corresponding to a plurality of scenes based on receiving information associated with a story, obtain text information associated with the descriptions corresponding to at least part of the plurality of scenes.

6. The electronic device (201) of any one of claims 1 to 5,
wherein the instructions, when executed by the processor (220), cause the electronic device (201) to:
store the at least one of the information on the first content and the second information corresponding to the at least one main object,
based on identifying a request for generating a video associated with a second story, identify whether the second story is correlated with the first story,
and
based on identifying that the second story is correlated with the first story, obtain the video associated with the second story using at least one of the information on the first content and the second information.

7. The electronic device (201) of any one of claims 2 to 5, wherein the instructions, when executed by the processor (220), cause the electronic device (201) to:
provide the first content including text information associated with a description corresponding to the at least one main object, and
as at least part of identifying the second information corresponding to the at least one main object based on the user input for the first content, identify at least one of a designation of at least one main object, an approval of the first content, or a change in the text information included in the first content.

8. The electronic device (201) of any one of claims 1 to 6, wherein the instructions, when executed by the processor (220), cause the electronic device (201) to:
provide the first content including a preview image corresponding to the at least one main object,
wherein a resolution of a main object included in the preview image may be lower than a resolution of the main object included in the obtained video.

9. The electronic device (201) of any one of claims 1 to 8,
wherein the instructions are configured to, when executed by the processor (220), cause the electronic device (201) to:
as at least part of obtaining the video including the plurality of scenes based on the first information and the information in the first content, based on information output from a third model by inputting the first information and the information on the first content into the third model trained to generate a video based on receiving information related to a description, obtain the video including the plurality of scenes.

10. The electronic device (201) of any one of claims 1 to 9,
wherein the instructions are configured to, when executed by the processor (220), cause the electronic device (201) to, as at least part of obtaining the video including the plurality of scenes based on the first information and the information on the first content:
transmit, to an external electronic device including a third model trained to generate a video based on receiving information related to a description, a request associated with generating a video, wherein the request includes the first information and the information on the first content, and
receive, from the external electronic device, the video including the plurality of scenes generated by the external electronic device in response to the request.

11. The electronic device (201) of any one of claims 1 to 10,
wherein the at least one main object includes at least one of a main background, a main character, or audio information corresponding to the main character.

12. A method performed by an electronic device (201), the method comprising:
identifying (401) first information associated with a description corresponding to a plurality of scenes;
based on the first information, identifying (403) at least one main object included in at least a portion of the plurality of scenes;
based on information output from a first model by inputting a description corresponding to the at least one main object into the first model configured to output content based on receiving information associated with a scene, obtain (405) first content corresponding to the at least one main object;
and
based on the first information and information on the first content, obtaining (409) a video including the plurality of scenes, wherein the at least one main object is consistently visualized in the at least a portion of the plurality of scenes.

13. The method of claim 12, further comprising:
based on a user input for the first content, identifying second information corresponding to the at least one main object,
wherein the video is further obtained based in the second information.

14. The method of claim 12 or 13, further comprising:
based on the first information and the information on the first content, and, if dependent on claim 13, the second information, obtaining (601) a first image including an image of the at least one main object; and
providing (603) the first image as an input for obtaining at least one image corresponding to at least one scene including the at least one main object.

15. A non-transitory computer-readable medium recording computer-executable instructions that, when executed by a processor (220) of an electronic device (201), cause the electronic device (201) to:
receive a request associated with obtaining a video including a plurality of scenes;
based on a first information associated with a description associated with the plurality of scenes identified based on the request, identify at least one main object included in at least a portion of the plurality of scenes;
based on information output from a first model by inputting a description corresponding to the at least one main object into the first model configured to output content based on receiving information associated with a scene, obtain first content corresponding to at least one main object;
and
based on the first information and the information on the first content, obtain the video including the plurality of scenes,, wherein the at least one main object is consistently visualized in the at least a portion of the plurality of scenes.
